(19) Europäisches Patentamt

European Patent Office

Office européen des brevets

(11) Publication number: **0 519 625 B1**

## EUROPEAN PATENT SPECIFICATION

(45) Date of publication of patent specification: **13.12.95**   (51) Int. Cl.⁶: **C10G 11/04**

(21) Application number: **92305140.3**

(22) Date of filing: **04.06.92**

(54) **Naphtha cracking**

| | |
|---|---|
| (30) Priority: **21.06.91 US 719205** **21.06.91 US 718888** | (73) Proprietor: **MOBIL OIL CORPORATION** **3225 Gallows Road** **Fairfax,** **Virginia 22037-0001 (US)** |
| (43) Date of publication of application: **23.12.92 Bulletin 92/52** | (72) Inventor: **Le, Ouang Ngoc** **330 Rhode Island Avenue** **Cherry Hill,** **New Jersey 08002 (US)** Inventor: **Thomson, Robert Thomas** **9233 Creekside Court** **Lawrenceville,** **New Jersey 08648 (US)** |
| (45) Publication of the grant of the patent: **13.12.95 Bulletin 95/50** | |
| (84) Designated Contracting States: **BE DE FR GB IT NL** | |
| (56) References cited: **EP-A- 0 222 597**   **EP-A- 0 237 212** **EP-A- 0 306 050**   **WO-A-91/11390** **US-A- 4 310 440**   **US-A- 4 969 987** | (74) Representative: **Colmer, Stephen Gary et al** **European Office of Patent Counsel** **Mobil House** **500-600 Witan Gate** **Central Milton Keynes** **Buckinghamshire MK9 1ES (GB)** |

Rank Xerox (UK) Business Services
(3.10/3.09/3.3.3)

**Description**

This invention relates to catalytic cracking of petroleum naphtha.

There has been considerable development of processes for synthesizing alkyl tertiary-alkyl ethers as octane boosters in place of conventional lead additives in gasoline. The etherification processes for the production of methyl tertiary alkyl ethers, in particular methyl t-butyl ether (MTBE) and t-amyl methyl ether (TAME) have been the focus of considerable research. It is known that isobutylene (i-butene) and other isoalkenes (branched olefins) produced by hydrocarbon cracking may be reacted with methanol, ethanol, isopropanol and other lower aliphatic primary and secondary alcohols over an acidic catalyst to provide tertiary ethers. Methanol is considered the most important $C_1$-$C_4$ oxygenate feedstock because of its widespread availability and low cost.

Naphtha reforming, in which $C_6^+$ paraffins and naphthenes are converted to aromatics, provides a major source of high octane gasoline in current refining strategies. However, due to environmental constraints, replacement of aromatic-rich reformate with high octane ethers and alkylate would be highly desirable. Naphtha cracking provides one viable source of $C_3$-$C_5$ olefins and isoparaffins, but existing naphtha cracking processes suffer from the major drawback that they produce significant quantities of light gas ($C_1$-$C_2$) and linear $C_3$-$C_5$ paraffins, which are low value by-products. Therefore, development of a naphtha cracking process which maximizes the yield of $C_3$-$C_5$ olefins and isoparaffins would be highly desirable.

Surprisingly, it has now been discovered that certain mesoporous crystalline materials of the type described in International Patent Publication No WO 91/11390 published August 8, 1991 show greater selectivity for the formation of $C_5$- olefins from naphtha cracking than conventional zeolite naphtha cracking catalysts, such as the medium-pore zeolites ZSM-5 and MCM-22.

Accordingly, the invention resides in a process for cracking a paraffinic naphtha feedstock by contacting the feedstock with a catalyst comprising an inorganic, porous, non-layered crystalline phase material exhibiting, after calcination, an X-ray diffraction pattern with at least one peak at a d-spacing greater than about 18 Angstrom Units and having a benzene adsorption capacity of greater than 15 grams of benzene per 100 grams of said material at 6.7 kPa (50 torr) and 25°C.

Preferably, the crystalline phase material has a hexagonal arrangement of uniformly-sized pores having diameters of at least about 13 Angstrom Units and, after calcination, exhibits a hexagonal electron diffraction pattern that can be indexed with a $d_{100}$ value greater than about 18 Angstrom Units.

Preferably, the catalyst has an acid cracking activity (alpha value) less than 15.

The catalyst employed in the process of the invention comprises an inorganic, porous, non-layered crystalline phase material exhibiting, in its calcined form, an X-ray diffraction pattern with at least one peak at a position greater than about 18 Angstrom Units d-spacing (4.909 degrees two-theta for Cu K-alpha radiation). More particularly, the calcined crystalline non-layered material of the invention may be characterized by an X-ray diffraction pattern with at least two peaks at positions greater than about 10 Angstrom Units d-spacing (8.842 degrees two-theta for Cu K-alpha radiation), at least one of which is at a position greater than about 18 Angstrom Units d-spacing, and no peaks at positions less than about 10 Angstrom units d-spacing with relative intensity greater than about 20% of the strongest peak. Still more particularly, the X-ray diffraction pattern of the calcined material of this invention will have no peaks at positions less than about 10 Angstrom units d-spacing with relative intensity greater than about 10% of the strongest peak.

X-ray diffraction data were collected on a Scintag PAD X automated diffraction system employing theta-theta geometry, Cu K-alpha radiation, and an energy dispersive X-ray detector. Use of the energy dispersive X-ray detector eliminated the need for incident or diffracted beam monochromators. Both the incident and diffracted X-ray beams were collimated by double slit incident and diffracted collimation systems. The slit sizes used, starting from the X-ray tube source, were 0.5, 1.0, 0.3 and 0.2 mm, respectively. Different slit systems may produce differing intensities for the peaks. The materials of the present invention that have the largest pore sizes may require more highly collimated incident X-ray beams in order to resolve the low angle peak from the transmitted incident X-ray beam.

The diffraction data were recorded by step-scanning at 0.04 degrees of two-theta, where theta is the Bragg angle, and a counting time of 10 seconds for each step. The interplanar spacings, d's, were calculated in Angstrom units (A), and the relative intensities of the lines, I/Io, where Io is one-hundredth of the intensity of the strongest line, above background, were derived with the use of a profile fitting routine. The intensities were uncorrected for Lorentz and polarization effects. The relative intensities are given in terms of the symbols vs = very strong (75-100), s = strong (50-74), m = medium (25-49) and w = weak (0-24). It should be understood that diffraction data listed as single lines may consist of multiple overlapping lines which under certain conditions, such as very high experimental resolution or crystallographic changes,

2

may appear as resolved or partially resolved lines. Typically, crystallographic changes can include minor changes in unit cell parameters and/or a change in crystal symmetry, without a substantial change in structure. These minor effects, including changes in relative intensities, can also occur as a result of differences in cation content, framework composition, nature and degree of pore filling, thermal and/or hydrothermal history, and peak width/shape variations due to particle size/shape effects, structural disorder or other factors known to those skilled in the art of X-ray diffraction.

The material employed in the process of the invention is further characterised by an equilibrium benzene adsorption capacity of greater than about 15 grams benzene/100 grams crystal at 6.7 kPa (50 torr) and 25°C. The equilibrium benzene adsorption capacity characteristic of this material is measured on the basis of no pore blockage by incidental contaminants. For instance, the sorption test will be conducted on the crystalline material phase having any pore blockage contaminants and water removed by ordinary methods. Water may be removed by dehydration techniques, e.g. thermal treatment. Pore blocking inorganic amorphous materials. e.g. silica, and organics may be removed by contact with acid or base or other chemical agents such that the detrital material will be removed without detrimental effect on the crystal of the invention.

The equilibrium benzene adsorption capacity is determined by contacting the material of the invention, after dehydration or calcination at, for example, 450 to 700°C, typically 540°C, for at least one hour and other treatment, if necessary, in an attempt to remove any pore blocking contaminants, at 25°C and 50 torr benzene until equilibrium is reached. The weight of benzene sorbed is then determined as more particularly described hereinafter.

The materials used in the process of the invention are generally mesoporous, by which is meant they have uniform pores within the size range of 13 to 200 Angstroms, more usually 15 to 100 Angstroms. In a preferred embodiment, the material appears to have a hexagonal arrangement of large channels with open internal diameters from 13 to 200 Angstroms. This structure can be revealed by transmission electron microscopy and electron diffraction. Thus, electron micrographs of properly oriented specimens of the material show a hexagonal arrangement of large channels and the corresponding electron diffraction patterns give an approximately hexagonal arrangement of diffraction maxima. The d100 spacing of the electron diffraction patterns is the distance between adjacent spots on the hkO projection of the hexagonal lattice and is related to the repeat distance a0 between channels observed in the electron micrographs through the formula d100 = a0 $\sqrt{3}$/2. This $d_{100}$ spacing observed in the electron diffraction pattern corresponds to the d-spacing of the low angle peak (>18 Angstrom d-spacing) in the X-ray diffraction pattern. The most highly ordered preparations of the material obtained so far have 20-40 distinct spots observable in the electron diffraction patterns. These patterns can be indexed with the hexagonal hkO subset of unique reflections of 100, 110, 200, 210, etc., and their symmetry-related reflections.

The inorganic, non-layered mesoporous crystalline material used in this invention typically has the following composition:

$$M_{n/q}(W_a X_b Y_c Z_d O_h)$$

wherein W is a divalent element, such as a divalent first row transition metal, e.g. manganese, cobalt and iron, and/or magnesium, preferably cobalt; X is a trivalent element, such as aluminum, boron, iron and/or gallium, preferably aluminum; Y is a tetravalent element such as silicon and/or germanium, preferably silicon; Z is a pentavalent element, such as phosphorus; M is one or more ions, such as, for example, ammonium, Group IA, IIA and VIIB ions, usually hydrogen, sodium and/or fluoride ions; n is the charge of the composition excluding M expressed as oxides; q is the weighted molar average valence of M; n/q is the number of moles or mole fraction of M; a, b, c and d are mole fractions of W, X, Y and Z, respectively; h is a number of from 1 to 2.5; and (a + b + c + d) = 1.

A preferred embodiment of the above crystalline material is when (a + b + c) is greater than d, and h = 2. A further embodiment is when a and d = 0, and h = 2.

In the as-synthesized form, the material employed in this invention typically has a composition, on an anhydrous basis, expressed empirically as follows:

$$rRM_{n/q}(W_a X_b Y_c Z_d O_h)$$

wherein R is the total organic material not included in M as an ion, and r is the coefficient for R, i.e. the number of moles or mole fraction of R. The M and R components are associated with the material as a result of their presence during crystallization, and are easily removed or, in the case of M, replaced by conventional post-crystallization methods.

Preferably, the crystalline material is a metallosilicate which is synthesized with Bronsted acid active sites by incorporating a tetrahedrally coordinated trivalent element, such as Al, Ga, B, or Fe, within the silicate framework. Aluminosilicate materials of this type are thermally and chemically stable, properties favored for acid catalysis; however, the advantages of mesoporous structures may be utilized by employing highly siliceous materials or crystalline metallosilicate having one or more tetrahedral species having varying degrees of acidity. In addition to the preferred aluminosilicates, the gallosilicate, ferrosilicate and borosilicate materials may be employed. Although matrices may be formed with the germanium analog of silicon, these are expensive and generally no better than the metallosilicates.

Most preferably, the crystalline material is an aluminosilicate having a silica-to-alumina ratio of 5:1 to 1000:1 and a Bronsted acid activity less than 15. Acid activity may be measured by acid cracking activity or ammonia absorption properties, such as temperature programmed desorption.

Synthesis of the crystalline material employed in the process of the invention is described in detail in our International Patent Publication No. WO 91/11390. In particular, materials having the composition defined by the above formula can be prepared from a reaction mixture having a composition in terms of mole ratios of oxides, within the following ranges:

| Reactants | Useful | Preferred |
|---|---|---|
| $X_2O_3/YO_2$ | 0 to 0.5 | 0.001 to 0.5 |
| $X_2O_3/(YO_2 + Z_2O_5)$ | 0.1 to 100 | 0.1 to 20 |
| $X_2O_3/(YO_2 + WO + Z_2O_5)$ | 0.1 to 100 | 0.1 to 20 |
| Solvent/$(YO_2 + WO + Z_2O_5 + X_2O_3)$ | 1 to 1500 | 5 to 1000 |
| $OH^-/YO_2$ | 0 to 10 | 0 to 5 |
| $(M_{2/e}O + R_{2/f}O)/(YO_2 + WO + Z_2O_5 + X_2O_3)$ | 0.01 to 20 | 0.05 to 5 |
| $M_{2/e}O/(YO_2 + WO + Z_2O_5 + X_2O_3)$ | 0 to 10 | 0 to 5 |
| $R_{2/f}O/(YO_2 + WO + Z_2O_5 + X_2O_3)$ | 0.01 to 2.0 | 0.03 to 1.0 |

wherein e and f are the weighted average valences of M and R, respectively, wherein the solvent is a $C_1$ to $C_6$ alcohol or diol, or, more preferably, water and wherein R comprises an organic directing agent having the formula $R_1 R_2 R_3 R_4 Q^+$ wherein Q is nitrogen or phosphorus and wherein at least one of $R_1$, $R_2$, $R_3$ and $R_4$ is aryl or alkyl group having 6 to 36 carbon atoms, e.g. $-C_6H_{13}$, $-C_{10}H_{21}$, $-C_{16}H_{33}$ and $-C_{18}H_{37}$, and each of the remainder of $R_1$, $R_2$, $R_3$ and $R_4$ is selected from hydrogen and an alkyl group having 1 to 5 carbon atoms. The compound from which the above ammonium or phosphonium ion is derived may be, for example, the hydroxide, halide, silicate or mixtures thereof.

The particular effectiveness of the above directing agent, when compared with other such agents known to direct synthesis of one or more other crystal structures, is believed due to its ability to function as a template in the nucleation and growth of the desired ultra-large pore materials. Non-limiting examples of these directing agents include cetyltrimethylammonium, cetyltrimethylphosphonium, octadecyltrimethylphosphonium, benzyltrimethylammonium, cetylpyridinium, myristyltrimethylammonium, decyltrimethylammonium, dodecyltrimethylammonium and dimethyldidodecylammonium compounds.

Preferably, the total organic, R, present in the reaction mixture comprises an additional organic directing agent in the form of an ammonium or phosphonium ion of the above directing agent formula but wherein each $R_1$, $R_2$, $R_3$ and $R_4$ is selected from hydrogen and an alkyl group of 1 to 5 carbon atoms (2 of the alkyl groups can be interconnected to form a cyclic compound). Examples of the additional organic directing agent include tetramethylammonium, tetraethylammonium, tetrapropylammonium, tetrabutylammonium and pyrrolidinium compounds. The molar ratio of the first-mentioned organic directing agent to the additional organic directing agent can be in the range 100/1 to 0.01/1. Where the additional organic directing agent is present, the molar ratio $R_{2/f}O/(YO_2 + WO + Z_2O_5 + X_2O_3)$ in the reaction mixture is preferably 0.1 to 2.0, most preferably 0.12 to 1.0.

In addition, to vary the pore size of the final crystalline phase material, the total organic, R, in the reaction mixture can include an auxiliary organic in addition to the organic directing agent(s) described above. This auxiliary organic is selected from (1) aromatic hydrocarbons and amines having 5-20 carbon atoms and halogen- and $C_1$-$C_{14}$ alkyl-substituted derivatives thereof, (2) cyclic and polycyclic aliphatic hydrocarbons and amines of 5 to 20 carbon atoms and halogen- and $C_1$-$C_{14}$ alkyl-substituted derivatives thereof and (3) straight and branched chain aliphatic hydrocarbons and amines having 3-16 carbon atoms and halogen-substituted derivatives thereof.

In the above auxiliary organics, the halogen substituent is preferably bromine. The $C_1$-$C_{14}$ alkyl substituent may be a linear or branched aliphatic chain, such as, for example, methyl, ethyl, propyl, isopropyl, butyl, pentyl and combinations thereof. Examples of these auxiliary organics include, for example, p-xylene, trimethylbenzene, triethylbenzene and triisopropylbenzene.

With the inclusion of the auxiliary organic in the reaction mixture, the mole ratio of auxiliary organic/$YO_2$ will be from 0.05 to 20, preferably from 0.1 to 10, and the mole ratio of auxiliary organic/organic directing agent(s) will be from 0.02 to 100, preferably from 0.05 to 35.

When a source of silicon is used in the synthesis method, it is preferred to use at least in part an organic silicate, such as, for example, a quaternary ammonium silicate. Non-limiting examples of such a silicate include tetramethylammonium silicate and tetraethylorthosilicate.

Non-limiting examples of various combinations of W, X, Y and Z contemplated for the above reaction mixture include:

| W | X | Y | Z |
|----|----|----|----|
| -- | Al | Si | -- |
| -- | Al | -- | P |
| -- | Al | Si | P |
| Co | Al | -- | P |
| Co | Al | Si | P |
| -- | -- | Si | -- |

including the combinations of W being Mg, or an element selected from the divalent first row transition metals, e.g. Mn, Co and Fe; X being B, Ga or Fe; and Y being Ge.

To produce the crystalline material of the invention, the reaction mixture described above is maintained at a temperature of 25 to 250°C, preferably 50 to 175°C, and preferably a pH of 9 to 14 for a period of time until the required crystals form, typically 5 minutes to 14 days, more preferably 1 to 300 hours.

When the crystalline material of the invention is an aluminosilicate, the synthesis method conveniently involves the following steps:

(1) Mix the organic (R) directing agent with the solvent or solvent mixture such that the mole ratio of solvent/$R_{2/f}O$ is within the range of 50 to 800, preferably from 50 to 500. This mixture constitutes the "primary template" for the synthesis method.

(2) To the primary template mixture of step (1) add the silica and alumina such that the ratio of $R_{2/f}O$/($SiO_2 + Al_2O_3$) is within the range 0.01 to 2.0.

(3) Agitate the mixture resulting from step (2) at a temperature of 20 to 40°C, preferably for 5 minutes to 3 hours.

(4) Allow the mixture to stand with or without agitation, preferably at 20 to 50°C, and preferably for 10 minutes to 24 hours.

(5) Crystallize the product from step (4) at a temperature of 50 to 150°C, preferably for 1 to 72 hours.

When used in the present process, it may be desirable to incorporate the crystalline composition of the invention with another material resistant to the temperatures and other conditions employed in organic conversion processes. Such materials include active and inactive materials and synthetic or naturally occurring zeolites as well as inorganic materials such as clays, silica and/or metal oxides such as alumina, titania and/or zirconia. The latter may be either naturally occurring or in the form of gelatinous precipitates or gels including mixtures of silica and metal oxides. Use of a material in conjunction with the new crystal, i.e. combined therewith or present during synthesis of the new crystal, which is active, tends to change the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated with naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the new crystal include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification.

In addition to the foregoing materials, the new crystal can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia.

It may be desirable to provide at least a part of the foregoing matrix materials in colloidal form so as to facilitate extrusion of the bound catalyst components(s).

The relative proportions of finely divided crystalline material and inorganic oxide matrix vary widely, with the crystal content ranging from 1 to 90 percent by weight and more usually, particularly when the composite is prepared in the form of beads, in the range 2 to 80 weight percent of the composite.

The naphtha feedstock used in the process of the invention preferably comprises C6-C12 hydrocarbons having a normal boiling range of 60 to 175°C. Typically naphtha feedstock materials are produced in petroleum refineries by distillation of crude oil. Typical straight run naphtha fresh feedstocks usually contain at least 15 wt% (preferably 20 to 50 wt%) C7-C12 normal and branched alkanes, at least 15 wt% (preferably 20 to 50%) C6+ cycloaliphatic (i.e., naphthene) hydrocarbons, and 1 to 40% (preferably less than 20%) aromatics. In addition to virgin naphtha, the process can utilize various paraffin containing feedstocks, such as derived from hydrocracking, cracked FCC naphtha, hydrocracked naphtha, coker naphtha, visbreaker naphtha and reformer extraction (Udex) raffinate, including mixtures thereof. Other suitable feedstock materials are disclosed by Q.Le et al in US Patent 4,969,987.

The cracking conditions employed in the present process include a total pressure up to about 500 kPa and a reaction temperature of 400 to 650°C, preferably a pressure less than 175 kPa and temperature of 450 to 540°C, wherein the cracking reaction produces more than 10 wt% branched C4-C5 aliphatics, and less than 10% C2-light aliphatic gas, based on fresh naphtha feedstock. The cracking reaction severity is maintained by employing a weight hourly space velocity of 1 to 50, preferably 1-10, based on active catalyst solids and a contact time less than 10 seconds, usually about 1-2 sec. While fixed bed, moving bed or dense fluidized bed catalyst reactor systems may be adapted for the cracking step, it is preferred to use a vertical riser reactor with fine catalyst particles being circulated in a fast fluidized bed.

In a multistage process for upgrading paraffinic naphtha to high octane fuel, the primary cracking stage comprises contacting a fresh paraffinic petroleum naphtha feedstock stream (eg- having a normal boiling range of about 65 to 175°C) for about 0.5 to 10 seconds with a first fluidized bed of the novel cracking catalyst described above to produce at least 5 wt% total C4-C5 branched aliphatic hydrocarbons containing isobutene, isoamylenes, isobutane and isopentanes, followed by separating the cracking effluent to obtain a light olefinic fraction rich in C4-C5 tertiary alkenes. The tertiary olefins from the C4-C5 isoalkene fraction may be etherified by catalytic reaction with lower alkanol to produce tertiary-alkyl ether product. It is advantegeous to recover isobutane and isopentanes from the cracking effluent and further convert the isobutane and isopentane to high octane fuel components, such as by alkylation with non-tertiary olefins.

In order to more fully illustrate the nature of the invention and the manner of practicing same, the following examples are presented. In the examples, whenever sorption data are set forth for comparison of sorptive capacities for water, cyclohexane, benzene and/or n-hexane, they are equilibrium adsorption values determined as follows:

A weighed sample of the adsorbent, after calcination at about 540°C for at least about 1 hour and other treatment, if necessary, to remove any pore blocking contaminants, is contacted with the desired pure adsorbate vapor in an adsorption chamber. The increase in weight of the adsorbent is calculated as the adsorption capacity of the sample in terms of grams/100 grams adsorbent based on adsorbent weight after calcination at about 540°C. The present composition exhibits an equilibrium benzene adsorption capacity at (6.7 kPa) 50 Torr and 25°C of greater than about 15 grams/100 grams, particularly greater than about 17.5 grams/100 grams and more particularly greater than about 20 grams/100 grams.

A preferred way to determine equilibrium adsorption values is to contact the desired pure adsorbate vapor in an adsorption chamber evacuated to less than 1 mm at conditions of 1.6 kPa (12 Torr) of water vapor, 5.3 kPa (40 Torr) of n-hexane or cyclohexane vapor, or 6.7 kPa (50 Torr) of benzene vapor, at 25°C. The pressure is kept constant (within about + 0.5 mm) by addition of adsorbate vapor controlled by a manostat during the adsorption period. As adsorbate is adsorbed by the crystalline material, the decrease in pressure causes the manostat to open a value which admits more adsorbate vapor to the chamber to restore the above control pressures. Sorption is complete when the pressure change is not sufficient to activate the manostat.

Another method for benzene adsorption data is on a suitable thermogravimetric analysis system, such as a computer-controlled 990/951 duPont TGA system. The adsorbent sample is dehydrated (physically sorbed water removed) by heating at, for example, about 350°C or 500°C to constant weight in flowing helium. If the sample is in as-synthesized form, e.g. containing organic directing agents, it is calcined at about 540°C in air and held to constant weight instead of the previously described 350°C or 500°C treatment. Benzene adsorption isotherms are measured at 25°C by blending a benzene saturated helium gas stream with a pure helium gas stream in the proper proportions to obtain the desired benzene partial pressure. The value of the adsorption at 6.7 kPa (50 Torr) of benzene is taken from a plot of adsorption isotherm.

In the examples, percentages are by weight unless otherwise indicated.

### EXAMPLE 1

One hundred grams of cetyltrimethylammonium (CTMA) hydroxide solution, prepared by contacting a 29 wt.% N,N,N- trimethyl-1-hexadecanaminium chloride solution with a hydroxide-for-halide exchange resin, was combined with 100 grams of an aqueous solution of tetramethylammonium (TMA) silicate (10% silica) with stirring. Twenty-five grams of HiSil®, a precipitated hydrated silica containing about 6 wt.% free water and about 4.5 wt.% bound water of hydration and having an ultimate particle size of about 0.02 micron, was added. The resulting mixture was placed in a polypropylene bottle, which was kept in a steam box at 95°C overnight. The mixture had a composition in terms of moles per mole $Al_2O_3$:

| | |
|---|---|
| 2.7 moles | $Na_2O$ |
| 392 moles | $SiO_2$ |
| 35.7 moles | $(CTMA)_2O$ |
| 61.7 moles | $(TMA)_2O$ |
| 6231 moles | $H_2O$ |

The resulting solid product was recovered by filtration and dried in air at ambient temperature. The product was then calcined at 540°C for 1 hour in nitrogen, followed by 6 hours in air.

The calcined product proved to have a surface area of 475 $m^2/g$ and the following equilibrium adsorption capacities in grams/100 grams:

| | |
|---|---|
| $H_2O$ | 8.3 |
| Cyclohexane | 22.9 |
| n-Hexane | 18.2 |
| Benzene | 21.5 |

The product of this example may be characterized as including a very strong relative intensity line at 37.8 ± 2.0 Angstroms d-spacing, and weak lines at 21.6 ± 1.0 and 19.2 ± 1.0 Angstroms. The present ultra-large pore material was demonstrated to be in the product of this example by transmission electron microscopy (TEM), which produced images of a hexagonal arrangement of uniform pores and hexagonal electron diffraction pattern with a $d_{100}$ value of about 39 Angstroms.

### EXAMPLE 2

One hundred grams of cetyltrimethylammonium (CTMA) hydroxide solution prepared as in Example 1 was combined with 100 grams of an aqueous solution of tetramethylammonium (TMA) hydroxide (25%) with stirring. Twenty-five grams of HiSil®, a precipitated hydrated silica containing about 6 wt.% free water and about 4.5 wt.% bound water of hydration and having an ultimate particle size of about 0.02 micron, was added. The resulting mixture was placed in a static autoclave at 150°C overnight. The mixture had a composition in terms of moles per mole $Al_2O_3$:

| | |
|---|---|
| 2.7 moles | $Na_2O$ |
| 291 moles | $SiO_2$ |
| 35.7 moles | $(CTMA)_2O$ |
| 102 moles | $(TMA)_2O$ |
| 6120 moles | $H_2O$ |

The resulting solid product was recovered by filtration and dried in air at ambient temperature. The product was then calcined at 540°C for 1 hour in nitrogen, followed by 6 hours in air.

The calcined product proved to have a surface area of 993 $m^2/g$ and the following equilibrium adsorption capacities in grams/100 grams:

| | |
|---|---|
| $H_2O$ | 7.1 |
| Cyclohexane | 47.2 |
| n-Hexane | 36.2 |
| Benzene | 49.5 |

The X-ray diffraction pattern of the calcined product of this example is characterized as including a very strong relative intensity line at 39.3 ± 2.0 Angstroms d-spacing, and weak lines at 22.2 ± 1.0 and 19.4 ± 1.0 Angstroms. TEM indicated that the product contained the present ultra-large pore material.

A portion of the above product was then contacted with 100% steam at 790°C (1450°F) for two hours. The surface area of the steamed material was measured to be 440 $m^2/g$, indicating that about 45% was retained following severe steaming.

Another portion of the calcined product of this example was contacted with 100% steam at 680°C (1250°F) for two hours. The surface area of this material was measured to be 718 $m^2/g$, indicating that 72% was retained after steaming at these conditions.

## EXAMPLE 3

Water, cetyltrimethylammonium hydroxide solution prepared as in Example 1, aluminum sulfate, HiSil® and an aqueous solution of tetrapropylammonium (TPA) bromide (35%) were combined to produce a mixture having a composition in terms of moles per mole $Al_2O_3$:

| | |
|---|---|
| 0.65 moles | $Na_2O$ |
| 65 moles | $SiO_2$ |
| 8.8 moles | $(CTMA)_2O$ |
| 1.22 moles | $(TPA)_2O$ |
| 1336 moles | $H_2O$ |

The resulting mixture was placed in a polypropylene bottle, which was kept in a steam box at 95°C for 192 hours. The sample was then cooled to room temperature and combined with CTMA hydroxide solution prepared as in Example 1 and TMA hydroxide (25% by weight) in the weight ratio of 3 parts mixture, 1 part CTMA hydroxide and 2 parts TMA hydroxide. The combined mixture was then placed in a polypropylene bottle and kept in a steam box at 95°C overnight. The combined mixture had a composition in terms of moles per mole $Al_2O_3$:

| | |
|---|---|
| 0.65 moles | $Na_2O$ |
| 65 moles | $SiO_2$ |
| 15 moles | $(CTMA)_2O$ |
| 1.22 moles | $(TPA)_2O$ |
| 35.6 moles | $(TMA)_2O$ |
| 2927 moles | $H_2O$ |

The resulting solid product was recovered by filtration and dried in air at ambient temperature. The product was then calcined at 540°C for 1 hour in nitrogen, followed by 6 hours in air.

The calcined product proved to have a surface area of 1085 $m^2/g$ and the following equilibrium adsorption capacities in grams/100 grams:

| H$_2$O | 11.5 |
|---|---|
| Cyclohexane | > 50 |
| n-Hexane | 39.8 |
| Benzene | 62 |

The X-ray diffraction pattern of the calcined product of this example is characterized as including a very strong relative intensity line at 38.2 ± 2.0 Angstroms d-spacing, and weak lines at 22.2 ± 1.0 and 19.4 ± 1.0 Angstroms. TEM indicated the product contained the present ultra-large pore material.

## EXAMPLE 4

Two hundred grams of cetyltrimethylammonium (CTMA) hydroxide solution prepared as in Example 1 was combined with 2 grams of Catapal® alumina (alpha-alumina monohydrate, 74% alumina) and 100 grams of an aqueous solution of tetramethylammonium (TMA) silicate (10% silica) with stirring. Twenty-five grams of HiSil®, a precipitated hydrated silica containing about 6 wt.% free water and about 4.5 wt.% bound water of hydration and having an ultimate particle size of about 0.02 micron, was added. The resulting mixture was placed in a static autoclave at 150°C for 48 hours. The mixture had a composition in terms of moles per mole Al$_2$O$_3$:

| 0.23 moles | Na$_2$O |
|---|---|
| 33.2 moles | SiO$_2$ |
| 6.1 moles | (CTMA)$_2$O |
| 5.2 moles | (TMA)$_2$O |
| 780 moles | H$_2$O |

The resulting solid product was recovered by filtration and dried in air at ambient temperature. The product was then calcined at 540°C for 1 hour in nitrogen, followed by 6 hours in air.

The calcined product proved to have a surface area of 1043 m$^2$/g and the following equilibrium adsorption capacities in grams/100 grams:

| H$_2$O | 6.3 |
|---|---|
| Cyclohexane | > 50 |
| n-Hexane | 49.1 |
| Benzene | 66.7 |

The X-ray diffraction pattern of the calcined product of this example is characterized as including a very strong relative intensity line at 40.8 ± 2.0 Angstroms d-spacing, and weak lines at 23.1 ± 1.0 and 20.1 ± 1.0 Angstroms. TEM indicated that the product contained the present ultra-large pore material.

## EXAMPLE 5

Two-hundred sixty grams of water was combined with 77 grams of phosphoric acid (85%), 46 grams of Catapal® alumina (74% alumina), and 24 grams of pyrrolidine (Pyr) with stirring. This first mixture was placed in a stirred autoclave and heated to 150°C for six days. The material was filtered, washed and air-dried. Fifty grams of this product was slurried with 200 grams of water and 200 grams of cetyltrimethylammonium hydroxide solution prepared as in Example 1. Four hundred grams of an aqueous solution of tetraethylammonium silicate (10% silica) was then added to form a second mixture which was placed in a polypropylene bottle and kept in a steam box at 95°C overnight. The first mixture had a composition in terms of moles per mole Al$_2$O$_3$:

| 1.0 moles | P$_2$O$_5$ |
|---|---|
| 0.51 moles | (Pyr)$_2$O |
| 47.2 moles | H$_2$O |

The resulting solid product was recovered by filtration and dried in air at ambient temperature. The product was then calcined at 540°C for 1 hour in nitrogen, followed by 6 hours in air.

The calcined product proved to have a surface area of 707 $m^2/g$ and the following equilibrium adsorption capacities in grams/100 grams:

| | |
|---|---|
| $H_2O$ | 33.2 |
| Cyclohexane | 19.7 |
| n-Hexane | 20.1 |
| Benzene | 23.3 |

The X-ray diffraction pattern of the calcined product of this example is characterized as including a very strong relative intensity line at 25.4 ± 1.5 Angstroms d-spacing. TEN indicated the product contained the present ultra-large pore material.

## EXAMPLE 6

A solution of 1.35 grams of $NaAlO_2$ (43.5% $Al_2O_3$, 30% $Na_2O$) dissolved in 45.2 grams of water was mixed with 17.3 grams of NaOH, 125.3 grams of colloidal silica (40%, Ludox HS-40®) and 42.6 grams of 40% aqueous solution of tetraethylammonium (TEA) hydroxide. After stirring overnight, the mixture was heated for 7 days in a steam box (95°C). Following filtration, 151 grams of this solution was mixed with 31 grams of cetyltrimethylammonium hydroxide solution prepared as in Example 1 and stored in the steam box at 95°C for 13 days. The mixture had the following relative molar composition:

| | |
|---|---|
| 0.25 moles | $Al_2O_3$ |
| 10 moles | $Na_2O$ |
| 36 moles | $SiO_2$ |
| 0.95 moles | $(CTMA)_2O$ |
| 2.5 moles | $(TEA)_2O$ |
| 445 moles | $H_2O$ |

The resulting solid product was recovered by filtration and washed with water and ethanol. The product was then calcined at 540°C for 1 hour in nitrogen, followed by 6 hours in air.

The calcined product composition included 0.14 wt.% Na, 68.5 wt.% $SiO_2$ and 5.1 wt.% $Al_2O_3$, and proved to have a benzene equilibrium adsorption capacity of 58.6 grams/100 grams.

The X-ray diffraction pattern of the calcined product of this example is characterized as including a very strong relative intensity line at 31.4 ± 1.5 Angstroms d-spacing. TEM indicated that the product contained the present ultra-large pore material.

## EXAMPLE 7

Sodium aluminate (4.15g) was added slowly into a solution containing 16g of myristyltrimethylammonium bromide ($C_{14}$TMABr) in 100g of water. Tetramethylammonium silicate (100g-10% $SiO_2$), HiSil® (25g) and tetramethylammonium hydroxide (14.2g-25% solution) were then added to the mixture. The mixture was crystallized in an autoclave at 120°C with stirring for 24 hours.

The product was filtered, washed and air dried. Elemental analysis showed the product contained 53.3 wt% $SiO_2$, 3.2 wt% $Al_2O_3$, 15.0 wt% C, 1.88 wt% N, 0.11 wt% Na and 53.5 wt% ash at 1000°C. The X-ray diffraction pattern of the material (calcined at 540°C for 1 hour in $N_2$ and 6 hours in air) includes a very strong relative intensity line at 35.3 ± 2.0 Angstroms d-spacing and weak lines at 20.4 ± 1.0 and 17.7 ± 1.0 Angstroms d-spacing. TEM indicated that the product contained the present ultra-large pore material.

The washed product, having been exchanged with 1N ammonium nitrate solution at room temperature, then calcined, proved to have a surface area of 827 $m^2/g$ and the following equilibrium adsorption capacities in g/100g anhydrous sorbent:

| | |
|---|---|
| $H_2O$ | 30.8 |
| Cyclohexane | 33.0 |
| n-Hexane | 27.9 |
| Benzene | 40.7 |

## EXAMPLE 8

Sodium aluminate (8.3g) was added slowly into a solution containing 184g of dodecyltrimethylammonium hydroxide ($C_{12}$TMAOH, 50%) solution diluted with 480g of water. UltraSil® (50g) and an aqueous solution of tetramethylammonium silicate (200g-10% $SiO_2$) and tetramethylammonium hydroxide (26.38g-25% solution) were then added to the mixture. The mixture was crystallized in an autoclave at 100°C with stirring for 24 hours.

The product was filtered, washed and air dried. The X-ray diffraction pattern of the material (calcined at 540°C for 1 hour in $N_2$ and 6 hours in air) includes a very strong relative intensity line at 30.4 ± 1.5 Angstroms d-spacing and weak lines at 17.7 ± 1.0 and 15.3 ± 1.0 Angstroms d-spacing. TEM indicated that the product contained the present ultra-large pore material.

The washed product, having been exchanged with 1N ammonium nitrate solution at room temperature, then calcined, proved to have a surface area of 1078 $m^2$/g and the following equilibrium adsorption capacities in g/100g anhydrous sorbent:

| | |
|---|---|
| $H_2O$ | 32.6 |
| Cyclohexane | 38.1 |
| n-Hexane | 33.3 |
| Benzene | 42.9 |

## EXAMPLE 9

A solution of 4.9 grams of $NaAlO_2$ (43.5 % $Al_2O_3$,30% $NaO_2$) in 37.5 grams of water was mixed with 46.3 cc of 40% aqueous tetraethylammonium hydroxide solution and 96 grams of colloidal silica (40%, Ludox HS-40®). The gel was stirred vigorously for 0.5 hour, mixed with an equal volume (150 ml) of cetyltrimethylammonium hydroxide solution prepared as in Example 1 and reacted at 100°C for 168 hours. The mixture had the following composition in terms of moles per mole $Al_2O_3$:

| | |
|---|---|
| 1.1 moles | $Na_2O$ |
| 30.6 moles | $SiO_2$ |
| 3.0 moles | $(TEA)_2O$ |
| 3.25 moles | $(CTMA)_2O$ |
| 609 moles | $H_2O$ |

The resulting solid product was recovered by filtration, washed with water then calcined at 540°C for 16 hours in air.

The calcined product proved to have a surface area of 1352 $m^2$/g and the following equilibrium adsorption capacities in grams/100 grams:

| | |
|---|---|
| $H_2O$ | 23.6 |
| Cyclohexane | >50 |
| n-Hexane | 49 |
| Benzene | 67.5 |

The X-ray diffraction pattern of the calcined product of this example may be characterized as including a very strong relative intensity line at 38.5 ± 2.0 Angstroms d-spacing and a weak line at 20.3 ± 1.0 Angstroms. TEM indicated that the product contained the present ultra-large pore material.

11

**EXAMPLE 10**

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil®, a precipitated hydrated silica containing about 6 wt.% free water and about 4.5 wt.% bound water of hydration and having an ultimate particle size of about 0.02 micron, was added. The resulting mixture was placed in a static autoclave at 150°C for 24 hours. The mixture had a composition in terms of moles per mole $Al_2O_3$:

| | |
|---|---|
| 1.25 moles | $Na_2O$ |
| 27.8 moles | $SiO_2$ |
| 5.1 moles | $(CTMA)_2O$ |
| 4.40 moles | $(TMA)_2O$ |
| 650 moles | $H_2O$ |

The resulting solid product was recovered by filtration and dried in air at ambient temperature. The product was then calcined at 540°C for 1 hour in nitrogen, followed by 6 hours in air. TEM indicated that this product contained the present ultra-large pore material. The X-ray diffraction pattern of the calcined product of this example can be characterized as including a very strong relative intensity line at 44.2 ± 2.0 Angstroms d-spacing and weak lines at 25.2 ± 1.5 and 22.0 ± 1.0 Angstroms.

The calcined product proved to have a surface area of 932 m$^2$/g and the following equilibrium adsorption capacities in grams/100 grams:

| | |
|---|---|
| $H_2O$ | 39.3 |
| Cyclohexane | 46.6 |
| n-Hexane | 37.5 |
| Benzene | 50 |

The product of this example was then ammonium exchanged with 1 N $NH_4NO_3$ solution, followed by calcination at 540°C for 10 hours in air.

**EXAMPLE 11**

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil®, a precipitated hydrated silica containing about 6 wt.% free water and about 4.5 wt.% bound water of hydration and having an ultimate particle size of about 0.02 micron, was added. The resulting mixture was placed in a steam box at 100°C for 48 hours. The mixture had a composition in terms of moles per mole $Al_2O_3$:

| | |
|---|---|
| 1.25 moles | $Na_2O$ |
| 27.8 moles | $SiO_2$ |
| 5.1 moles | $(CTMA)_2O$ |
| 4.4 moles | $(TMA)_2O$ |
| 650 moles | $H_2O$ |

The resulting solid product was recovered by filtration and dried in air at ambient temperature. The product was then calcined at 540°C for 1 hour in nitrogen, followed by 6 hours in air.

The calcined product proved to have the following equilibrium adsorption capacities in grams/100 grams:

12

| | |
|---|---|
| $H_2O$ | 35.2 |
| Cyclohexane | > 50 |
| n-Hexane | 40.8 |
| Benzene | 53.5 |

The X-ray diffraction pattern of the calcined product of this example may be characterized as including a very strong relative intensity line at 39.1 ± 2.0 Angstroms d-spacing and weak lines at 22.4 ± 1.0 and 19.4 ± 1.0 Angstroms. TEM indicated that this product contained the present ultra-large pore material.

The product of this example was then ammonium exchanged with 1 N $NH_4NO_3$ solution, followed by calcination at 540°C for 10 hours in air.

## EXAMPLE 12

A mixture of 125 grams of 29% CTMA chloride aqueous solution, 200 grams of water, 3 grams of sodium aluminate (in 50 grams $H_2O$), 65 grams of Ultrasil®, amorphous precipitated silica available from PQ Corporation, and 21 grams NaOH (in 50 grams $H_2O$) was stirred thoroughly and crystallized at 150°C for 168 hours. The reaction mixture had the following relative molar composition in terms of moles per mole silica:

| | |
|---|---|
| 0.10 moles | $(CTMA)_2O$ |
| 21.89 moles | $H_2O$ |
| 0.036 moles | $NaAlO_2$ |
| 0.53 moles | NaOH |

The solid product was isolated by filtration, washed with water, dried for 16 hours at room temperature and calcined at 540°C for 10 hours in air.

The calcined product proved to have a surface area of 840 $m^2/g$, and the following equilibrium adsorption capacities in grams/100 grams:

| | |
|---|---|
| $H_2O$ | 15.2 |
| Cyclohexane | 42.0 |
| n-Hexane | 26.5 |
| Benzene | 62 |

The X-ray diffraction pattern of the calcined product of this Example may be characterized as including a very strong relative intensity line at 40.5 ± 2.0 Angstroms d-spacing. TEM indicated that the product contained the present ultra-large pore material.

## EXAMPLE 13

To make the primary template mixture for this example, 240 grams of water was added to a 92 gram solution of 50% dodecyltrimethylammonium hydroxide, 36% isopropyl alcohol and 14% water such that the mole ratio of Solvent/$R_{2/f}O$ was 155. The mole ratio of $H_2O/R_{2/f}O$ in this mixture was 149 and the IPA/$R_{2/f}O$ mole ratio was 6. To the primary template mixture was added 4.15 grams of sodium aluminate, 25 grams of HiSil®, 100 grams of aqueous tetramethylammonium silicate solution (10% $SiO_2$) and 13.2 grams of 25% aqueous tetramethylammonium hydroxide solution. The mole ratio of $R_{2/f}O/(SiO_2 + Al_2O_3)$ was 0.28 for the mixture.

This mixture was stirred at 25°C for 1 hour. The resulting mixture was then placed in an autoclave at 100°C and stirred at 100 rpm for 24 hours. The mixture in the autoclave had the following relative molar composition in terms of moles per mole $SiO_2$:

| 0.05 mole | $Na_2O$ |
|---|---|
| 0.036 mole | $Al_2O_3$ |
| 0.18 mole | $(C_{12}TMA)_2O$ |
| 0.12 mole | $(TMA)_2O$ |
| 36.0 moles | $H_2O$ |
| 1.0 mole | IPA |

The resulting solid product was recovered by filtration, washed with water and dried in air at ambient temperature. The product was then calcined at 540°C for 1 hour in nitrogen, followed by 6 hours in air.

The calcined product proved to have a surface area of 1223 $m^2/g$ and the following equilibrium adsorption capacities in grams/100 grams:

| $H_2O$ | 25.5 |
|---|---|
| Cyclohexane | 41.1 |
| n-Hexane | 35.1 |
| Benzene | 51 |

The X-ray diffraction pattern of the calcined product of this example is characterized as including a very strong relative intensity line at 30.8 ± 1.5 Angstroms d-spacing and weak lines at 17.9 ± 1.0 and 15.5 ± 1.0 Angstroms. TEM indicated this product to contain the present ultra-large pore material.

## EXAMPLE 14

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt.% $SiO_2$), 10 grams of HiSil®, 200 grams of water and 70 grams of 1,3,5-trimethylbenzene (mesitylene). The resulting mixture was stirred at room temperature for several minutes. The gel was then loaded into a 600 cc autoclave and heated at 105°C for sixty-eight hours with stirring at 150 rpm. The mixture had a composition in terms of moles per mole $Al_2O_3$:

| 1.25 moles | $Na_2O$ |
|---|---|
| 27.8 moles | $SiO_2$ |
| 5.1 moles | $(CTMA)_2O$ |
| 2.24 moles | $(TMA)_2O$ |
| 2256 moles | $H_2O$ |
| 80.53 moles | 1,3,5-trimethylbenzene |

The resulting product was filtered and washed several times with warm (60-70°C) distilled water and with acetone. The final product was calcined to 538°C in $N_2$/air mixture and then held in air for about 10 hours.

The calcined product proved to have a surface area of 915 $m^2/g$ and an equilbrium benzene adsorption capacity of >25 grams/100 grams. Argon physisorption data indicated an argon uptake of 0.95 cc/gram, and a pore size centered on 78 Angstroms (Dollimore-Heal Method, see Example 16(b)), but running from 70 to greater than 105 Angstoms.

The X-ray diffraction pattern of the calcined product of this example may be characterized as having only enhanced scattered intensity in the very low angle region of the X-ray diffraction, where intensity from the transmitted incident X-ray beam is usually observed. However, TEM indicated that the product of this example contained several materials with different $d_{100}$ values as observed in their electron diffraction patterns. These materials were found to possess $d_{100}$ values between about 85 Angstroms d-spacing and about 110 Angstroms d-spacing.

## EXAMPLE 15

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt.% $SiO_2$), 10 grams of HiSil®, and 18 grams of 1,3,5-trimethylbenzene (mesitylene). The resulting mixture was stirred at room temperature for several minutes. The gel was then loaded into a 300 cc autoclave and heated at 105°C for four hours with stirring at 150 rpm. The mixture had a composition in terms of moles per mole $Al_2O_3$:

| | |
|---|---|
| 1.25 moles | $Na_2O$ |
| 27.8 moles | $SiO_2$ |
| 5.1 moles | $(CTMA)_2O$ |
| 2.24 moles | $(TMA)_2O$ |
| 650 moles | $H_2O$ |
| 19.9 moles | 1,3,5-trimethylbenzene |

The resulting product was filtered and washed several times with warm (60-70°C) distilled water and with acetone. The final product was calcined to 538°C in $N_2$/air mixture and then held in air for about 8 hours.

The calcined product proved to have a surface area of 975 $m^2$/g and an equilbrium benzene adsorption capacity of >40 grams/100 grams. Argon physisorption data indicated an argon uptake of 0.97 cc/gram, and a pore size of 63 Angstroms (Dollimore-Heal Method, see Example 16(b)), with the peak occurring at $P/P_o = 0.65$.

The X-ray diffraction pattern of the calcined product of this example may be characterized as including a very strong relative intensity line at 63 ± 5 Angstroms d-spacing and weak lines at 36.4 ± 2.0, 31.3 ± 1.5 Angstroms and 23.8 ± 1.0 Angstroms d-spacing. TEM indicated that the product of this example contained the present ultra-large pore material.

## EXAMPLE 16(a)

**Argon Physisorption For Pore Systems Up to About 60 Angstroms Diameter**

To determine the pore diameters of the products of this invention with pores up to about 60 Angstroms in diameter, 0.2 gram samples of the products of Examples 1 through 13 were placed in glass sample tubes and attached to a physisorption apparatus as described in U.S. Patent No. 4,762,010

The samples were heated to 300°C for 3 hours in vacuo to remove adsorbed water. Thereafter, the samples were cooled to 87°K by immersion of the sample tubes in liquid argon. Metered amounts of gaseous argon were then admitted to the samples in stepwise manner as described in U.S. Patent No. 4,762,010, column 20. From the amount of argon admitted to the samples and the amount of argon left in the gas space above the samples, the amount of argon adsorbed can be calculated. For this calculation, the ideal gas law and the calibrated sample volumes were used. (See also S.J. Gregg et al., Adsorption, Surface Area and Porosity, 2nd ed., Academic Press, 1982). It is common to use relative pressures which are obtained by forming the ratio of the equilibrium pressure and the vapor pressure $P_o$ of the adsorbate at the temperature where the isotherm is measured. Sufficiently small amounts of argon were admitted in each step to generate 168 data points in the relative pressure range from 0 to 0.6. At least about 100 points are required to define the isotherm with sufficient detail.

The step (inflection) in the isotherm, in this case (Example 4 product) at about $P/P_o = 0.4$, indicates filling of a pore system. The size of the step indicates the amount adsorbed, whereas the position of the step in terms of $P/P_o$ reflects the size of the pores in which the adsorption takes place. Larger pores are filled at higher $P/P_o$. In order to better locate the position of the step in the isotherm, the derivative with respect to log $(P/P_o)$ is formed. There is further provided a physical scale on the axis which converts the position of an adsorption peak in terms of log $(P/P_o)$ to the physical pore diameter in Angstroms. This conversion was obtained by using the following formula:

$$\log(P/P_o) = \frac{K}{d-0.38} \left[ \frac{S^4}{3(L-D/2)^3} - \frac{S^{10}}{9(L-D/2)^9} - \frac{S^4}{3(D/2)^3} + \frac{S^{10}}{9(D/2)^9} \right]$$

wherein d = pore diameter in nanometers, K = 32.17, S = 0.2446, L = d + 0.19, and D = 0.57.

This formula is derived from the method of Horvath and Kawazoe (G. Horvath et al., J. Chem. Eng. Japan, 16 (6) 470(1983)). The constants required for the implementation of this formula were determined from a measured isotherm of ALPO-5 and its known pore size. This method is particularly useful for microporous materials having pores of up to about 60 Angstroms in diameter.

The results of this procedure for the samples from Examples 1 through 13 are tabulated below. The samples from Examples 8, 11 and 13 gave two separate peaks, believed to be the result of two separate ultra-large pore phases in the products.

| Examples | Pore Diameter, Angstroms |
|---|---|
| 1 | 32.2 |
| 2 | 35.4 |
| 3 | 42.5 |
| 4 | 39.6 |
| 5 | 16.9 |
| 6 | 27.3 |
| 7 | 28.3 |
| 8 | 22.8, 30.8 |
| 9 | 36.8 |
| 10 | 36.1 |
| 11 | 35.0, 42.1 |
| 12 | 40.0 |
| 13 | 22.4, 30.4 |

**EXAMPLE 16(b)**

**Argon Physisorption For Pore Systems Over About 60 Angstrom Diameter**

In the pore regime above 60 Angstrom diameter, the Kelvin equation can be applied. It is usually given as:

$$\ln(P/P_o) = \frac{-2V}{r_k RT} \cos \theta$$

where:

= surface tension of sorbate
V = molar volume of sorbate
$\theta$ = contact angle (usually taken for practical reasons to be 0)
R = gas constant
T = absolute temperature
$r_k$ = capillary condensate (pore) radius
$P/P_o$ = relative pressure (taken from the physisorption isotherm)

The Kelvin equation treats adsorption in pore systems as a capillary condensation phenomenon and relates the pressure at which adsorption takes place to the pore diameter through the surface tension and contact angle of the adsorbate (in this case, argon). The principles upon which the Kelvin equation are based are valid for pores in the size range 5 to 100 nm diameter. Below this range the equation no longer reflects physical reality, since true capillary condensation cannot occur in smaller pores; above this range the logarithmic nature of the equation precludes obtaining sufficient accuracy for pore size determination.

The particular implementation of the Kelvin equation often chosen for measurement of pore size is that reported by Dollimore and Heal (D. Dollimore and G.R. Heal, J. Applied Chem., 14, 108 (1964)). This method corrects for the effects of the surface layer of adsorbate on the pore wall, of which the Kelvin equation proper does not take account, and thus provides a more accurate measurement of pore diameter. While the method of Dollimore and Heal was derived for use on desorption isotherms, it can be applied equally well to adsorption isotherms by simply inverting the data set.

The products of Examples 14 and 15 were subjected to the Dollimore and Heal Method for argon physisorption data, as indicated.

## PROCESS EXAMPLE 17

Petroleum naphtha was partially cracked by contact with a catalyst containing the product of Example 11, a hexagonal crystalline aluminosilicate having pores of 35 and 42.1 Anstroms. The catalyst was prepared by mulling and pelletizing 65 wt% of the as-synthesised material of Example 11 with 35 wt% $Al_2O_3$ binder. The resultant particles were calcined in nitrogen at 430°C for 3 hours then in air at 540°C for 6 hours and then exchanged twice with 1N ammonium nitrate solution maintained at a pH of 8 by ammonium hydroxide addition. The ammonium-exchanged product was drained, dried at 120°C and then calcined in air at 540°C for 3 hours.

A standard $H-ZSM-5/Al_2O_3$ extruded catalyst containing 65 wt% zeolite was also evaluated for comparison. Experimental runs were performed in a fixed-bed isothermal tubular reactor, at weight hourly space velocity of 6/hr. catalyst were heated to about 540°C (1000°F) under nitrogen and maintained at this temperature and 445 kPa pressure (50 psig) for 18 hours. To commence the reaction, an Arab Light $C_6$-180°C straight run naphtha was charged to the reactor at a rate of 6 WHSV. The composition of the naphtha feedstock was:

| | |
|---|---|
| Total $C_5$- | 1.5 wt% |
| Normal Paraffins $C_6$-$C_{11}$ | 26.3 wt% |
| Isoparaffins $C_6$-$C_{11}$ | 31.3 wt% |
| Naphthenes $C_6$-$C_{11}$ | 25.7 wt% |
| Aromatics $C_6$-$C_{11}$ | 14.3 wt% |
| Total $C_{12}$+ | 0.9 wt% |

Nitrogen flow rate was regulated to maintain contact time of approximately one second. Liquid was fed continuously to the reactor for 30 minutes, followed by 30 minutes of nitrogen purging before resumption of the feed. Conversion values were based on the amount of $C_5$- products produced for less than 50% partial conversion of feedstock. The results are shown in Table A below:

## Table A

| | Invention | ZSM-5 |
|---|---|---|
| Conversion, wt.% | 45 | 43 |
| Selectivity, wt.% | | |
| $C_1$-$C_2$ par. | 5 | 6 |
| $C_2^=$ | 4 | 11 |
| $C_3^=$-$C_5^=$ (total) | 74 | 54 |
| $nC_3$-$nC_5$ | 6 | 23 |
| $iC_4$-$iC_5$ | 11 | 6 |

The results from naphtha cracking studies, displayed in Table A, show that the catalyst fo the invention exhibits higher selectivity for $C_3$-$C_5$ olefins than medium-pore ZSM-5 at comparable conditions. The total yield of undesirable products (light gas + linear paraffins) was much higher from ZSM-5 than the product of Example 11.

The selectivity of of the catalyst of the invention for cracking the cycloparaffins in the naphtha feed is depicted by the compositional change for the normally liquid fraction, as set forth in Table B.

## Table B

|  | Feed | Invention | ZSM-5 |
|---|---|---|---|
| $C_6$-$C_9$ Naphthene Conversion, wt% | – | 57 | 20 |
| $C_6$-$C_9$ paraffin Conversion, wt% | – | 36 | 63 |
| PONA compositon, wt% |  |  |  |
| Total $C_5$- | 3.8 | 2.4 | 3.9 |
| Naphthenes $C_6$-$C_9$ | 12.2 | 7.8 | 16.3 |
| Other paraffins $C_6$-$C_9$ | 52.9 | 49.7 | 32.4 |
| Olefins $C_6$-$C_9$ | 0.1 | 0.5 | 12.1 |
| Total Aromatics | 16.2 | 28.5 | 14.4 |
| Aliphatic $C_{10}$+ | 14.8 | 11.1 | 20.9 |

The results displayed in Table B show that the catalyst of the invention exhibits higher selectivity for the conversion of cycloparaffins than comparable medium pore acid ZSM-5. The relatively small amount of aromatics increase in the product liquid stream from present catalyst indicates that cycloparaffin removal is accomplished primarily through cracking reactions; whereas ZSM-5 is shown to remove significantly higher amounts of other paraffins.

The olefinic C5- product of the above Example can be etherified by reaction with methanol over acid catalyst to product MTBE and TAME octane improvers. Isobutane and isopentanes from cracking effluent may be recovered from the primary stage effluent or passed through the etherification unit operation unreacted. These C4-C5 isoalkanes can be upgraded to high octane fuel components by conventional alkylation with propene or butene. Alternatively, the isoalkanes can be dehydrogenated to the corresponding isoalkenes and etherified with primary isoalkene products to make tertiary alkyl ethers.

The process of the invention is characterized by low yields of undesirable normal C3-C5 alkanes and substantially increased yields of isobutane and isopentanes, which can be further upgraded to high octane fuel components by conventional HF alkylation or dehydrogenated to the corresponding isoalkene.

**Claims**

1. A process for cracking a paraffinic naphtha feedstock by contacting the feedstock with a catalyst comprising an inorganic, porous, non-layered crystalline phase material exhibiting, after calcination, an X-ray diffraction pattern with at least one peak at a d-spacing greater than about 18 Angstrom Units and having a benzene adsorption capacity of greater than 15 grams of benzene per 100 grams of said material at 6.7 kPa (50 torr) and 25 °C.

2. The process of claim 1 wherein the crystalline phase material has a hexagonal arrangement of uniformly-sized pores having diameters of at least about 13 Angstrom Units and, after calcination, exhibits a hexagonal electron diffraction pattern that can be indexed with a $d_{100}$ value greater than about 18 Angstrom Units.

3. The process of of claim 1 or claim 2 wherein said the crystalline phase material comprises uniformly-sized pores with cross-sectional dimensions of 20 to 100 Angstrom.

EP 0 519 625 B1

4. The process of any one of claims 1 to 3 wherein said crystalline phase has a fomula expressed as follows:

$M_{n/q}(W_aX_bY_cZ_dO_h)$

wherein M is one or more ions; n is the charge of the process excluding M expressed as oxides; q is the weighted molar average valence of M; n/q is the number of moles or mole fraction of M; W is one or more divalent elements; X is one or more trivalent elements; Y is one or more tetravalent elements; Z is one or more pentavalent elements; a, b, c, and d are mole fractions of W, X, Y, and Z, respectively; h is a number of from 1 to 2.5; and $(a+b+c+d) = 1$.

5. The process of claim 4 wherein the sum $(a+b+c)$ is greater than d, and $h = 2$.

6. The process of claims 4 or 5 wherein X comprises aluminum, boron, gallium or iron and Y comprises silicon or germanium.

7. The process of claim 6 wherein a and d are 0 and $h = 2$.

8. The process of any preceding claim wherein said contacting is conducted at a temperature of 400-650°C; a pressure up to 500 kPa range; and a weight hourly space velocity, based on active catalyst, of 1-50.

9. The process of any preceding claim wherein the contacting time is less than 10 seconds.

10. The process of any preceding claim wherein the naphtha feedstock has a boiling range of 65 to 175°C.

**Patentansprüche**

1. Verfahren zum Cracken eines paraffinischen Naphta-Ausgangsmaterials durch Kontakt des Ausgangsmaterials mit einem Katalysator, der ein anorganisches, poröses, nicht geschichtetes Material in der kristallinen Phase umfaßt, das nach dem Kalzinieren ein Röntgenbeugungsdiagramm mit mindestens einem Peak beim d-Abstand von mehr als etwa 18 Angström-Einheiten und eine Adsorptionskapazität für Benzol von mehr als 15 g Benzol pro 100 g des Materials bei 6,7 kPa (50 Torr) und 25°C aufweist.

2. Verfahren nach Anspruch 1, wobei das Material in der kristallinen Phase eine hexagonale Anordnung von Poren mit gleicher Größe mit einem Durchmesser von mindestens etwa 13 Angström-Einheiten hat und nach dem Kalzinieren ein hexagonales Elektronenbeugungsdiagramm zeigt, das mit einem $d_{100}$-Wert von mehr als etwa 18 Angström-Einheiten bezeichnet werden kann.

3. Verfahren nach Anspruch 1 oder Anspruch 2, wobei das Material in der kristallinen Phase Poren mit einheitlicher Größe mit Abmessungen des Querschnitts von 20 bis 100 Angström umfaßt.

4. Verfahren nach einem der Ansprüche 1 bis 3, wobei die kristalline Phase eine wie folgt ausgedrückte Formel hat:

$M_{n/q}(W_aX_bY_cZ_dO_h)$

worin M ein oder mehrere Ionen darstellt; n die Ladung des Verfahrens ist, ausgenommen M, als Oxide ausgedrückt; q das gewichtete Mittel der molaren Valenz von M ist; n/q die Anzahl der Mole oder der Molenbruch von M ist; W ein oder mehrere zweiwertige Elemente ist; X ein oder mehrere dreiwertige Elemente ist; Y ein oder mehrere vierwertige Elemente ist; Z ein oder mehrere fünfwertige Elemente ist; a, b, c und d die Molenbrüche von W, X, Y bzw. Z sind; h eine Zahl von 1 bis 2,5 ist; und $(a+b+c+d) = 1$ ist.

5. Verfahren nach Anspruch 4, wobei die Summe $(a+b+c)$ mehr als d beträgt und $h = 2$ ist.

6. Verfahren nach Anspruch 4 oder 5, wobei X Aluminium, Bor, Gallium oder Eisen umfaßt und Y Silicium oder Germanium umfaßt.

19

**7.** Verfahren nach Anspruch 6, wobei a und d 0 sind und h = 2 ist.

**8.** Verfahren nach einem der vorstehenden Ansprüche, wobei der Kontakt bei einer Tempratur von 400 bis 650°C, einem Druck bis zum Bereich von 500 kPa und einer stündlichen Gewichts-Raum-Geschwindigkeit auf der Basis des aktiven Katalysators von 1 bis 50 erfolgt.

**9.** Verfahren nach einem der vorstehenden Ansprüche, wobei die Kontaktzeit weniger als 10 s beträgt.

**10.** Verfahren nach einem der vorstehenden Ansprüche, wobei das Naphta-Ausgangsmaterial einen Siedebereich von 65 bis 175°C aufweist.

## Revendications

**1.** Un procédé de craquage de charge de naphta paraffinique par mise au contact de la charge avec un catalyseur comprenant une substance en phase cristalline non stratifiée poreuse présentant après calcination un spectre de diffraction aux rayons-X comportant au moins un pic correspondant à une distance d supérieure à environ 18 Angstroms et présentant une capacité d'adsorption de benzène supérieure à 15g de benzène par 100g de ladite substance sous 6,7 kPa (50 torr) et à 25°C.

**2.** Le procédé selon la revendication 1 dans lequel la substance en phase cristalline présente une disposition hexagonale de pores de dimension uniforme présentant des diamètres d'au moins 13 Angstroms et après calcination, présente un spectre de diffraction électronique hexagonal qui peut être indexé avec une valeur $d_{100}$ supérieure à environ 18 Angstroms.

**3.** Le procédé selon la revendication 1 ou 2, dans lequel ladite substance en phase cristalline comprend des pores de dimensions uniforme présentant une section de 20 à 100 Angstroms.

**4.** Le procédé selon l'une quelconque des revendications 1 à 3, dans lequel ladite phase cristalline répond à la formule exprimée par la formule suivante:

$$M_{n/q}(W_aX_bY_cZ_dO_h)$$

dans laquelle
M représente un ou plusieurs ions;
n est la charge de la formule à l'exception de M exprimée en oxydes;
q est la valence moyenne molaire pondérée de M;
n/q est le nombre de moles ou fractions molaires de M;
W représente un ou plusieurs éléments divalents;
X représente un ou plusieurs éléments trivalents;
Y représente un ou plusieurs éléments tétravalents;
Z représente un ou plusieurs éléments pentavalents;
a, b, c et d sont les fractions molaires de W, X, Y et Z, respectivement;
h est un nombre compris entre 1 et 2,5; et

$(a+b+c+d) = 1$.

**5.** Le procédé selon la revendication 4 dans lequel la somme $(a+b+c)$ est supérieure à d, et h = 2.

**6.** Le procédé selon la revendication 4 ou 5 dans lequel X comprend l'aluminium, le bore, le gallium ou le fer et Y comprend le silicium ou le germanium.

**7.** Le procédé selon la revendication 6, dans lequel a et d sont égaux à 0 et h = 2.

**8.** Le procédé selon une quelconque des revendications 1 à 7 dans lequel ledit contact est effectué à une température de 400 à 650°C; sous une pression pouvant atteindre 500 kPa; et une vitesse spatiale horaire pondérale, exprimée par rapport au catalyseur actif, de 1 à 50.

9. Le procédé selon l'une quelconque des revendications 1 à 8, dans lequel le temps de contact est inférieur à 10 secondes.

10. Le procédé selon l'une quelconque des revendications 1 à 9, dans lequel la charge de naphta présente un domaine d'ébullition compris entre 65 et 175°C.